# EUROPÄISCHE PATENTSCHRIFT

(11) **EP 2 164 727 B1**
(45) Veröffentlichungstag und Bekanntmachung des Hinweises auf die Patenterteilung: **02.03.2011**
(21) Anmeldenummer: 08775076.6
(22) Anmeldetag: 15.07.2008
(51) Int. Cl.: B60R 21/264

(54) **GASGENERATOR FÜR EINE FAHRZEUGINSASSEN-SCHUTZVORRICHTUNG UND VERFAHREN ZUM ENTFERNEN VON FESTSTOFFEN UND FLÜSSIGEN ABBRANDRESTEN IN EINEM GASSTROM**
GAS GENERATOR FOR A VEHICLE PASSENGER PROTECTION DEVICE, AND METHOD FOR THE ELIMINATION OF SOLID MATTER AND LIQUID BURNT RESIDUES IN A GAS FLOW
GENERATEUR DE GAZ POUR UN DISPOSITIF DE PROTECTION DES OCCUPANTS D'UN VEHICULE ET PROCEDE POUR ELIMINER DES SOLIDES ET DES RESIDUS DE COMBUSTION LIQUIDES DANS UN FLUX GAZEUX

(30) Priorität: 16.07.2007 DE 102007033344
(43) Veröffentlichungstag der Anmeldung: 24.03.2010
(73) Patentinhaber: Takata-Petri AG, 63743 Aschaffenburg (DE)
(72) Erfinder: WINDHAUSEN, Björn, 63773 Goldbach (DE); KRATZ, Heiko, 61476 Kronberg (DE)
(74) Vertreter: Müller, Wolfram Hubertus
(86) Internationale Anmeldenummer: PCT/EP2008/059216
(87) Internationale Veröffentlichungsnummer: WO 2009/010504

(56) Entgegenhaltungen:
- DE-A1- 19 505 580
- DE-A1- 19 716 652
- DE-U1-202004 012 722
- JP-A- 2001 039 261

## Beschreibung

Die Erfindung betrifft einen Gasgenerator für eine Fahrzeuginsassen-Schutzvorrichtung gemäß dem Oberbegriff des Anspruchs 1 und ein Verfahren zum Beseitigen von Feststoffen und flüssigen Abbrandresten in einem Gasstrom.

Beim Abbrennen einer gaserzeugenden Ladung eines Gasgenerators entstehen in der Regel Feststoffe und/oder flüssige Abbrandreste, die in dem Gasstrom enthalten sind. Um ein Ausströmen dieser Feststoffe und flüssigen Abbrandreste in die Umgebung und damit beispielsweise in einen Gassack zu verhindern, ist eine Filterung des Gasstroms mit Drahtgestrickfiltem, Streckmetallfiltem, Sintermetallfiltern oder einer Kombination der genannten Filtertechniken bekannt. Eine vergrößerte Oberfläche der Filter ermöglicht dabei eine gute Wärmeaufnahme und damit Kühlung des Gasstroms und bietet die Möglichkeit der Filterung der Abbrandreste. Die Verwendung von Filtern kann allerdings zu einem erhöhten Gewicht, einem erhöhtem Bauraum, nicht definierten Durchflussraten und einem erhöhten Herstellungspreis führen.

Aus der EP 0 808 258 B1 ist ein Gasgenerator bekannt, bei dem der von einer gaserzeugenden Ladung erzeugte Gasstrom von einer Brennkammer in eine Expansionskammer geführt wird, die aus einer Abscheidekammer und einer Filterkammer geführt wird.

Die Druckschrift DE 20 2004 0 127 2241 beschreibt einen Gasgenerator gemäß dem Oberbegriff des Patentanspruchs 1.

Der vorliegenden Erfindung liegt die Aufgabe zugrunde, einen Gasgenerator sowie ein Verfahren zum Entfernen von Feststoffen und flüssigen Abbrandresten in einem Gasstrom zur Verfügung zu stellen, die ohne die Notwendigkeit des Einsatzes von Filtern Feststoffe und flüssige Abbrandreste effektiv aus dem Gasstrom eines Gasgenerators abscheiden.

Diese Aufgabe wird erfindungsgemäß durch einen Gasgenerator mit den Merkmalen des Anspruchs 1 und ein Verfahren mit den Merkmalen des Anspruchs 13 gelöst. Ausgestaltungen der Erfindung sind in den Unteransprüchen angegeben.

Danach wird ein Gasgenerator mit einer konisch ausgebildeten Abscheidekammer bereitgestellt, die eine erste Wand, in der eine Mehrzahl von Gasdurchtrittsöffnungen ausgebildet sind, und mindestens eine zu der ersten Wand winklig angeordnete zweite Wand aufweist, in der mindestens eine Ausblasöffnung ausgebildet ist. In der Brennkammer erzeugtes Gas tritt durch die Gasdurchtrittsöffnungen in die Abscheidekammer ein und verlässt diese durch die mindestens eine Ausblasöffnung. Die konische Form der Abscheidekammer bewirkt, dass der Gasstrom bei Durchlaufen der Abscheidekammer ein Druckgefälle durchläuft, wobei die Geschwindigkeit des Gasstroms reduziert wird. Eine Reduzierung der Geschwindigkeit des Gasstroms erhöht die Effektivität der Abscheidung von Feststoffen und flüssigen Abbrandresten des Gasstroms im Abscheider.

Unter "konisch" im Sinne der vorliegenden Erfindung wird jede Raumstruktur verstanden, die sich in mindestens eine Raumrichtung verjüngt. Ein Beispiel für eine konische Ausgestaltung im Sinne der vorliegenden Erfindung ist eine geometrische Anordnung, die zwei winklig zueinander angeordnete Wände oder Seitenwände aufweist. Dabei können die Wände oder Seitenwände gekrümmt und beispielsweise kreisförmig ausgebildet sein.

In einer Ausgestaltung ist vorgesehen, dass die Abscheidekammer derart ausgestaltet ist, dass der Gasstrom nach Durchströmen der Gasdurchtrittsöffnungen auf mindestens eine Wand der Abscheidekammer auftrifft und anschließend eine Umlenkung erfährt. Nach einem ersten solchen Umlenken durchläuft der Gasstrom, verursacht durch die Konizität der Abscheidekammer, ein Druckgefälle, wobei die Geschwindigkeit des Gasstroms reduziert wird.

In einer weiteren Ausgestaltung ist die Abscheidekammer derart ausgestaltet, dass der Gasstrom nach Durchströmen der Gasdurchtrittsöffnungen auf die zweite Wand der Abscheidekammer auftrifft, dort eine erste Umlenkung erfährt, anschließend auf eine dritte Wand der Abscheidekammer auftrifft, dort eine zweite Umlenkung erfährt, und dann durch die mindestens eine Ausblasöffnung die Abscheidekammer verlässt. Bei jedem Auftreffen des Gasstroms auf eine eingrenzende Wand werden Feststoffe, wie heiße Abbrandpartikel und flüssige Abbrandreste, abgeschieden. Des Weiteren treten Kühlungsvorgänge auf. Es werden dem Gasstrom somit Energie und Partikel entzogen. Durch das bevorzugte zweimalige Durchlaufen dieses Prozesses werden Feststoffe und flüssige Abbrandreste in effektiver Weise aus dem Gasstrom entfernt.

Ein Ausführungsbeispiel der Erfindung sieht vor, dass die erste Wand in Bezug auf die Außengeometrie des Gasgenerators schräg verläuft. Dabei wird die Abscheidekammer durch die erste, schräg verlaufende Wand, die zweite Wand und eine dritte Wand gebildet, wobei die zweite Wand durch eine Seitenwand des Gasgeneratorgehäuses und die dritte Wand durch einen Boden- oder Deckelbereich des Gasgeneratorgehäuses gebildet ist. Damit muss zur Bereitstellung der konisch geformten Abscheidekammer lediglich die erste, schräg verlaufende Wand bereitgestellt werden, die auch als Abscheider bezeichnet wird. Die weiteren Wände werden durch Wände des Generatorgehäuses gebildet. Es ist jedoch ebenso möglich, zur Bereitstellung einer Konizität der Abscheidekammer beispielsweise eine Seitenwand des Generatorgehäuses schräg anzuordnen oder die erste und die zweite Wand mit unterschiedlicher Schrägstellung auszubilden.

Ein weiteres Ausführungsbeispiel sieht vor, dass die Gasdurchtrittsöffnungen in der Abscheidekammer versetzt zu der mindestens einen Ausblasöffnung angeordnet sind. Versatz bedeutet dabei, dass die Gasdurchtrittsöffnungen und die Ausblasöffnungen einen unterschiedlichen Abstand zu einer Bezugsfläche aufweisen. Beispielsweise ist vorgesehen, dass das Verhältnis des Abstandes einer Gasdurchtrittsöffnung zu einem Boden- oder Deckelbereich des Gasgenerator zum Abstand der mindestens einen Ausblasöffnung zu einem solchen Boden- oder Deckelbereich größer oder gleich 1,5 ist.

In einer weiteren Ausgestaltung ist vorgesehen, dass die Gasdurchtrittsöffnungen der ersten Wand derart ausgebildet sind, dass der Gasstrom aus der ersten Wand im Wesentlichen in tangentialer Richtung in die Abscheidekammer strömt. Dabei ist die erste Wand drehbar gelagert, so dass aufgrund des tangentialen Gasaustritts die erste Wand und damit der Gasstrom in Rotation versetzt werden.

Ein erfindungsgemäßes Verfahren zum Abscheiden von Feststoffen und flüssigen Abbrandresten eines Gasstroms eines Gasgenerators umfasst ein Leiten des Gasstroms durch eine konisch geformte Abscheidekammer, wobei der Gasstrom auf mindestens eine Wand der Abscheidekammer auftrifft und anschließend eine Umlenkung erfährt.

Die Erfindung wird nachfolgend unter Bezugnahme auf die Figuren anhand mehrerer Ausführungsbeispiele näher erläutert. Es zeigen:
- Fig. 1: schematisch in Schnittdarstellung ein erstes Ausführungsbeispiel eines Gasgenerators mit einer konisch ausgebildeten Abscheidekammer;
- Fig. 2: in teilweise geschnittener Ansicht ein zweites Ausführungsbeispiel eines Gasgenerators mit einer konisch ausgebildeten Abscheidekammer;
- Fig. 3-6: den Gasgenerator der Fig. 2, wobei unterschiedliche Phasen der Gasausbreitung dargestellt sind;
- Fig. 7-8: im Bereich einer Abscheidewand einer Abscheidekammer ausgebildete Dachgauben; und
- Fig. 9: einen Gasgenerator entsprechend dem Gasgenerator der Fig. 2, wobei der Abstand zwischen Gasdurchtrittsöffnungen und Ausblasöffnungen des Gasgenerators verdeutlicht ist.

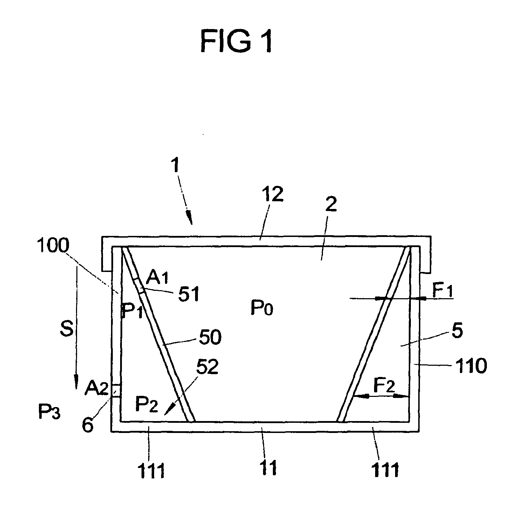

Die Fig. 1 zeigt einen rotationssymmetrisch aufgebauten Gasgenerator 1, der ein Generatorgehäuse bestehend aus einem Generatortopf 11 und einem mit diesem verbundenen Generatordeckel 12 aufweist. Innerhalb des Generatorgehäuses ist eine Brennkammer 2 ausgebildet, in der ein Anzündelement, eine Anzündladung und Treibstoffmittel angeordnet sind (nicht dargestellt). Der Gasgenerator 1 bildet des Weiteren angrenzend an die Brennkammer 2 eine Abscheidekammer 5 aus, die durch eine in Bezug auf die Außengeometrie des Gasgenerators 1 schräg angeordnete Abscheidewand 50 (erste Wand), nachfolgend auch als Abscheider bezeichnet, durch eine Seitenwand 110 des Generatortopfs 11 (zweite Wand) und durch einen Bereich 111 des Bodens des Generatortopfs 11 (dritte Wand) gebildet ist. Die schräge Anordnung des Abscheiders 50 ist derart, dass zum Generatordeckel 12 hin eine Querschnittsverkleinerung erfolgt.

Aufgrund der schrägen Anordnung des Abscheiders 50 liegt eine im seitlichen Schnitt konische Form der Abscheidekammer 5 vor, wobei der Konus sich in Richtung des Generatordeckels 12 verjüngt. Durch die konische Form weist die Abscheidekammer 5 in ihrem oberen Bereich eine geringere Querschnittsfläche als in ihrem unteren Bereich auf, was beispielhaft durch die unterschiedlich großen Querschnittsflächen F₁ und F₂ in der Fig. 1 dargestellt ist. Die Querschnittsflächen F₁, F₂ verlaufen senkrecht zur Hochachse, d.h. horizontal. Dabei gilt, dass F₂ größer als F₁ ist.

In dem Abscheider 50 befindet sich im oberen Bereich eine Vielzahl von Gasdurchtrittsöffnungen 51, die beispielsweise als Löcher, Langlöcher oder Dachgauben ausgebildet sind. In der Seitenwand 110 der Abscheidekammer 5 bzw. des Generatortopfes 11 sind im unteren Bereich und in vertikaler Richtung versetzt zu den Gasdurchrittsöffnungen 51 eine oder mehrere Ausblasöffnungen 6 für den Gasstrom ausgebildet. Die Gasaustrittsöffnungen 51 weisen einen Querschnitt A1 und die Ausblasöffnungen 6 einen Querschnitt A2 auf, wobei gilt, dass A1 größer als A2 ist, d. h. der engste Strömungsquerschnitt liegt an den Ausblasöffnungen 6 vor.

Innerhalb der Brennkammer liegt ein Arbeitsdruck P₀ während der Umsetzung des Gassatzes vor. P₀ ist eine Funktion des Abbrands der in der Brennkammer 2 angeordneten gaserzeugenden Ladung und abhängig von der Zeit. In der Abscheidekammer 5 liegt im oberen Bereich angrenzend an die Gasdurchtrittsöffnungen 51 ein Druck P₁ vor, der den Druck des Gases nach Durchströmen des Abscheiders 50 angibt. Weiter liegt im unteren Bereich des Abscheiders 5 vor Verlassen des Gasstromes durch die Ausblasöffnungen 6 ein Druck P₂ vor. Der Umgebungsdruck nach einem Ausströmen des Gases in die Umgebung ist als P₃ angegeben. Es gilt näherungsweise, dass zum Zeitpunkt t=0 (vor Auslösung) P₀ gleich P₃ ist.

Es wird darauf hingewiesen, dass der Konus der Abscheidekammer sich in einer alternativen Ausgestaltung in Richtung des Bodens des Generatortopfs 11 verjüngen könnte. Die Schrägstellung des Abscheiders 50 wäre dementsprechend gespiegelt. Ebenso würden sich bei einer solchen Ausgestaltung die Gasaustrittsöffnungen 51 und die Ausblasöffnungen 6 in entsprechend gespiegelter Position befinden.

Es wird im Folgenden auf die Funktion und Wirkung des in der Fig. 1 dargestellten Gasgenerators 1 mit Abscheidekammer 5 eingegangen.

Nach Zünden der in der Brennkammer 2 angeordneten gaserzeugenden Ladung erfolgt eine Erhöhung des Druckes P₀ in der Brennkammer 2. Dies führt dazu, dass das erzeugte Gas von der Brennkammer 2 durch die Gasdurchtrittsöffnungen 51 in die Abscheidekammer 5 überströmt. Dies erfolgt im Wesentlichen ohne Auftreten eines Druckverlustes. Dabei erfolgt bereits eine erste Filterfunktion insofern, als die abbrennenden festen Bestandteile der gaserzeugenden Ladung (die beispielsweise in Form von Treibstofftabletten bereitgestellt ist) in der Brennkammer 2 verbleiben und am Verlassen der Brennkammer 2 gehindert werden.

Es wird darauf hingewiesen, dass, da der Querschnitt A1 der Gasdurchtrittsöffnungen 51 größer ist als der Querschnitt A2 der Ausblasöffnungen 6, an den Gasdurchtrittsöffnungen 51 keine Schallgeschwindigkeit auftritt, die Gase vielmehr ohne Erreichen der Schallgeschwindigkeit überströmen. Im gesamten Gasgenerator 1 liegt die Geschwindigkeit des Gasstroms unterhalb der Schallgeschwindigkeit.

Beim Durchtreten durch die Gasdurchtrittsöffnungen 51 wird dem Gasstrom eine Bewegungsrichtung in Richtung der begrenzenden seitlichen Generatorwand 110 aufgeprägt. Der heiße Gasstrom trifft mit hoher Geschwindigkeit auf die begrenzende und kalte Generatorwand 110. Beim Auftreffen werden Feststoffe wie heiße Abbrandpartikel und flüssige Abbrandreste abgeschieden. Dabei treten Kühlungsvorgänge auf. Auf der Innenseite der Wand 110 baut sich durch Kondensation und/oder Adhäsion und/oder Schleudern Material auf. Es werden dem Gasstrom Energie und Partikel entzogen. Die Temperatur und der Druck sinken. Es liegt der Druck P₁ vor.

Der Gasstrom wird nun um ca. 90° umgelenkt und strömt entlang des sich verbreiternden Konusses in Richtung des Bodens der Abscheidekammer 5. Aufgrund der sich vergrößernden Querschnittsfläche der Abscheidekammer 5 während dieser Strömung (der Querschnitt vergrößert sich von der Querschnittsfläche F₁ auf die Querschnittsfläche F₂), und da das Produkt zwischen der Geschwindigkeit des Gasstroms im Bereich der Querschnittsfläche F₁ und der Querschnittsfläche F₁ gleich dem Produkt der Geschwindigkeit des Gasstroms im Bereich der Querschnittsfläche F₂ und der Querschnittsfläche F₂ ist, nimmt die Geschwindigkeit des Gasstroms notwendigerweise ab, d. h. der Gasstrom wird gebremst. Damit korrespondiert ein Druckgefälle entlang der Richtung S.

Im unteren Bereich bildet die Abscheidekammer 5 eine Art Hinterschnitt 52 aus, in dem der Gasstrom verwirbelt wird. Zusätzlich wird er erneut gegen eine eingrenzende Wand, hier den Bereich 111 des Bodenabschnitts des Generatortopfs 11 gesteuert. Der erläuterte Mechanismus der Abscheidung und Kühlung kommt ein weiteres Mal in Gang. Die vorangegangene Reduzierung der Geschwindigkeit des Gasstroms in der Richtung S erhöht dabei die Effektivität der Abkühlung und Abscheidung, da Feststoffe und flüssige Abbrandreste aufgrund der geringeren Gasgeschwindigkeit leichter durch Kondensation etc. dem Gasstrom entzogen werden können. So führt die geringere Gasgeschwindigkeit zu einer geringeren Temperatur, die wiederum ein leichteres Kondensieren und Abscheiden ermöglicht.

Die gereinigten und gekühlten Gase erfahren nun erneut eine Umlenkung um etwa 90° und werden dem Druckgefälle folgend durch die Ausblasöffnungen 6 in die Umgebung abgegeben. Da die Ausblasöffnungen 6 den engsten Querschnitt A2 im gesamten Gasgenerator 1 aufweisen, wird die Strömung innerhalb der Ausblasöffnungen 6 auf Schallgeschwindigkeit beschleunigt. Dies hängt damit zusammen, dass die Ausblasöffnungen 6 näherungsweise eine Lavaldüse bilden, die zu einer beschleunigten Strömung führt. Bei einer Lavaldüse liegt vor der Düse eine Unterschallgeschwindigkeit, in der Düse Schallgeschwindigkeit und nach der Düse Überschallgeschwindigkeit vor, wobei der Gasstrom nach der Düse allerdings schell abgebremst wird.

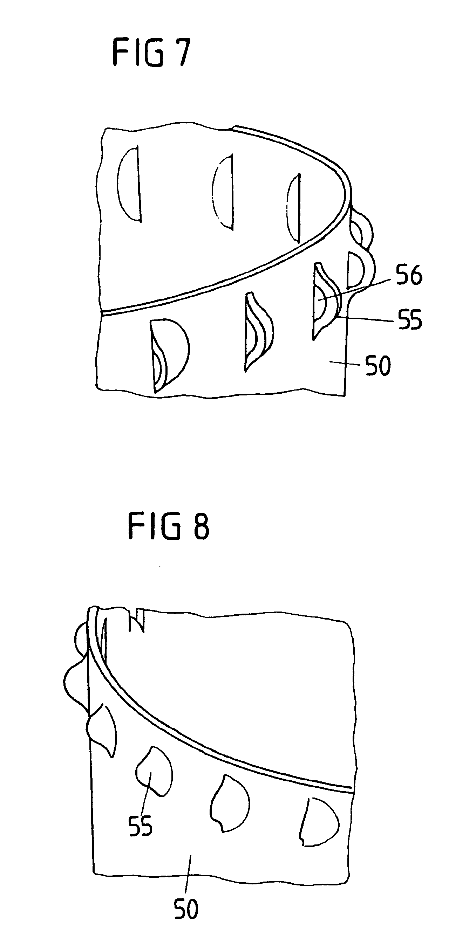

Zusätzlich kann vorgesehen sein, dass der Gasstrom um Rotation um die Mittelachse des Gasgenerators 1 versetzt wird. Eine solche Rotation kann durch eine tangentiale Richtungsgebung des Gasstroms an den Gasdurchtrittsöffnungen 51 (wie anhand der Figuren 7 und 8 noch erläutert werden wird) oder durch eine Antriebsvorrichtung erfolgen. Eine Rotation des Gasstroms vergrößert den Weg, bis der Gasstrom mit einer eingrenzenden Wand 110 in Interaktion tritt, und verbessert dadurch die Abscheide- und Abkühlungsvorgänge.

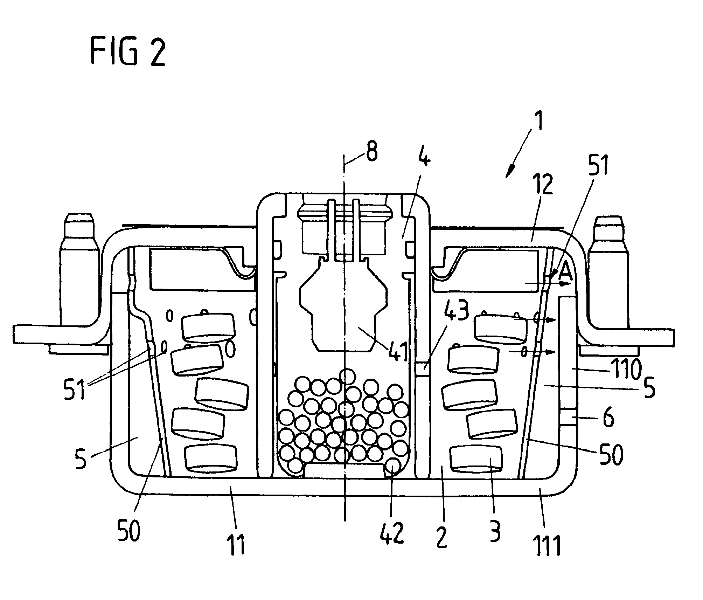

Die Fig. 2 zeigt ein weiteres Ausführungsbeispiel eines Gasgenerators 1. Der Gasgenerator 1 ist rotationssymmetrisch aufgebaut und weist eine mittige Achse 8 auf. Es ist eine schematisch dargestellte Brennkammer 2 vorgesehen, in der eine Mehrzahl von Treibstofftabletten 3 angeordnet ist. Weiter ist mittig eine Anzündkammer 4 vorgesehen, in der ein Anzündelement 41 und eine Anzündladung 42 bestehend aus einem Granulat angeordnet sind. Die Anzündkammer 4 kann Teil der Brennkammer 2 sein oder von dieser durch eine mit Öffnungen 43 versehene Wand getrennt sein. Weiter ist eine Abscheidekammer 5 mit einem schräg verlaufenden Abscheider 50 mit Gasdurchtrittsöffnungen 51 vorgesehen.

Die Anordnung ist umgeben von einem Generatorgehäuse bestehend aus einem Generatortopf 11 und einem Generatordeckel 12. Im Bereich der Abscheidekammer 5 befinden sich ein Bodenabschnitt 111 des Bodens des Generatortopfs 11 und eine Seitenwand 110 des Generatortopfs 11. In der Seitenwand 110 sind ein oder mehrere Ausblasöffnungen 6 vorgesehen. Die Ausgestaltung der Abscheidekammer 5 entspricht dabei im Wesentlichen der Ausgestaltung der Abscheidekammer der Fig. 1.

Die Funktion und Wirkungsweise des Gasgenerators 1 und der Abscheidekammer 5 entsprechen der Funktion und Wirkungsweise, wie sie in Bezug auf die Fig. 1 beschrieben wurde. Ergänzend wird Folgendes angemerkt.

In an sich bekannter Weise zündet das Zündmittel 41 nach Anlegen einer Spannung die Anzündladung 42. Ein durch diese erzeugter Zündstrahl zündet die Treibstofftabletten 3. Der mit dem Abbrennen der Treibstofftabletten 3 verbundene Druckanstieg führt zu einem Überströmen des Gasstroms von der Brennkammer 2 in die Abscheidekammer 5, wobei heiße Gase mit Feststoffen und flüssigen Abbrandresten die Gasdurchtrittsöffnungen 51 des Abscheiders 50 durchströmen und in die Abscheidekammer 5 gelangen. Dies ist durch die Pfeile A der Fig. 2 angedeutet.

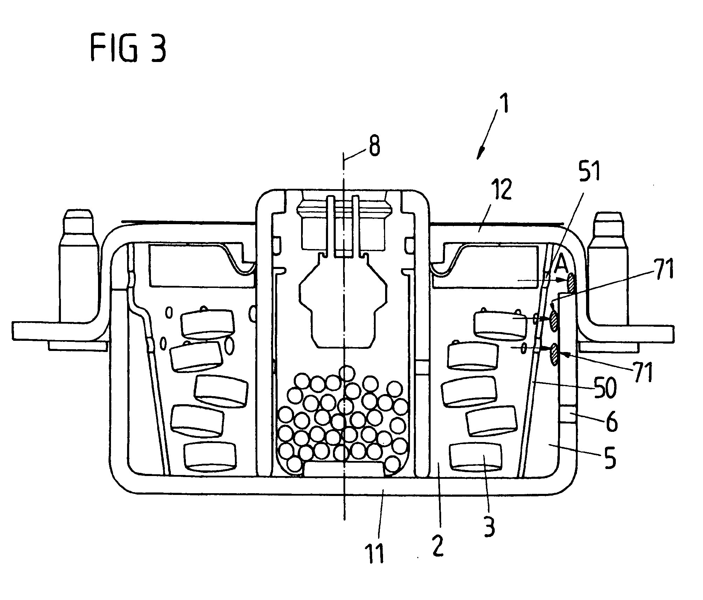

Die mit Feststoffen und flüssigen Abbrandresten versehenen heißen Gase treffen nach Durchströmen des Abscheiders 50 in einem ersten Auftreffbereich 71 auf die eingrenzende Wand 110 des Gasgenerators. Dabei werden Feststoffe und flüssige Abbrandreste abgeschieden, wobei teilweise Kondensationsvorgänge an den kalten Wänden der eingrenzenden Wand 110 stattfinden, vgl. Fig. 3.

In einer bevorzugten, jedoch nicht notwendigen Ausgestaltung ist dabei vorgesehen, dass die heißen Gase beim Durchströmen der Gasdurchtrittsöffnungen 51 den Abscheider 50 in Rotation um die Achse 8 versetzen. Hierzu sind die Gasdurchtrittsöffnungen 51 beispielsweise entsprechend den Figuren 7 und 8 als Dachgauben 55 ausgebildet, deren Öffnungen 56 das durchströmende Gas in tangentialer Richtung aus den Dachgauben 55 austreten lassen. Der damit verbundene Rückstoß versetzt den in diesem Fall drehbar gelagerten Abscheider 50 in Rotation. Dabei tritt der Effekt auf, dass der Gasstrom ebenfalls in Rotation versetzt wird und Zentrifugalkräfte erfährt. Dies führt zu einem verbesserten Abscheiden fester und flüssiger Gasbestandteile und eine verbesserte Abkühlung. Es wird jedoch darauf hingewiesen, dass die Rotation des Abscheiders 50 nur eine Option darstellt und nicht notwendigerweise realisiert sein muss. Auch wird darauf hingewiesen, dass eine Rotation in anderer Weise, beispielsweise durch eine Antriebsvorrichtung bereitgestellt werden kann. In einem solchen Fall ist in einer Ausgestaltung vorgesehen, dass die Antriebsvorrichtung den Abscheider 50 entgegen der Rückstoßrichtung dreht, die der Abscheider durch tangential austretendes Gas erfährt. Dies führt zu einer verstärkten Abscheidung und Kühlung.

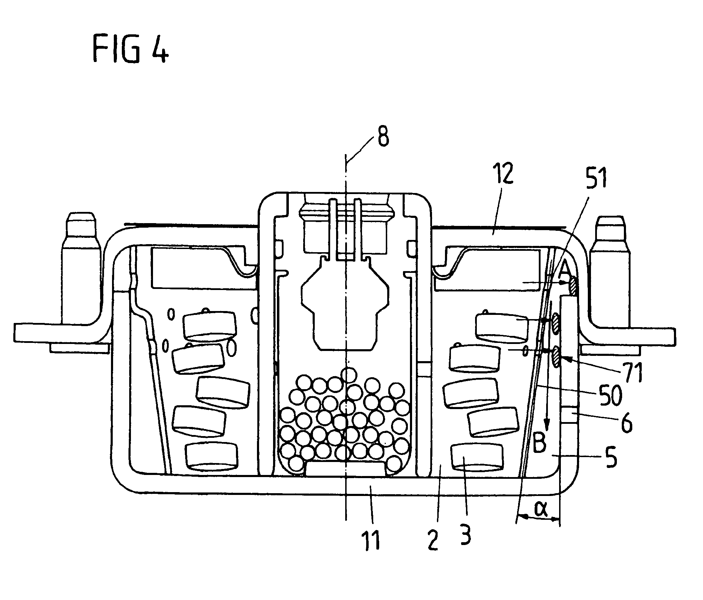

Gemäß der Fig. 4 folgen die immer noch heißen Gase mit noch verbliebenen Feststoffen und flüssigen Abbrandresten dem Druckgefälle und werden dementsprechend, wie durch den Pfeil B dargestellt, näherungsweise um 90° umgelenkt. Das Druckgefälle wird durch die Konusform der Abscheidekammer 50 verstärkt, wobei wie in Bezug auf die Fig. 1 erläutert die Strömung abgebremst wird.

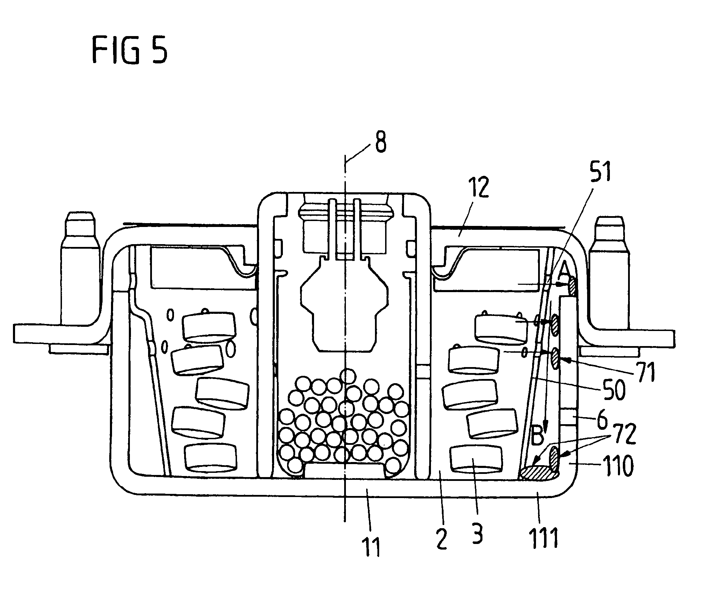

Entsprechend der Fig. 5 treffen die umgelenkten Gase in einem zweiten Auftreffbereich 42 auf eine weitere eingrenzende Wand, nämlich dem Bodenabschnitt 111 sowie untere Bereiche der Seitenwand 110. In diesem zweiten Auftreffbereich 42 werden erneut Feststoffe und flüssige Abbrandreste abgeschieden und tritt erneut ein Kühlungsvorgang auf. Die abgeschiedenen Stoffe können sich als Niederschlag an der eingrenzenden Wand 111, 110 des Gasgenerators 1 zeigen.

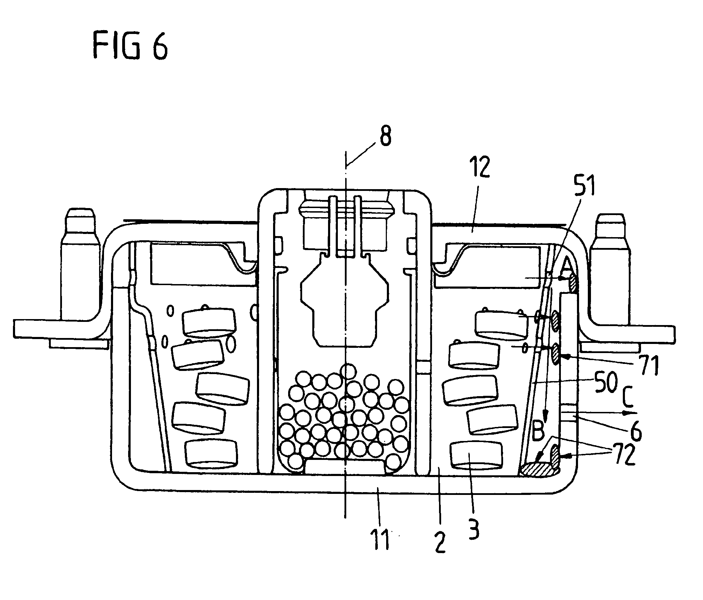

Gemäß der Fig. 6 und dem dort dargestellten Pfeil C verlassen die Gase nach der erneuten Abscheidung von Feststoffen und flüssigen Brandresten dem Druckgefälle folgend das Generatorgehäuse, wobei sie durch die Ausblasöffnungen 6 strömen und beim Austritt bevorzugt eine Beschleunigung bis über die Schallgeschwindigkeit erfahren.

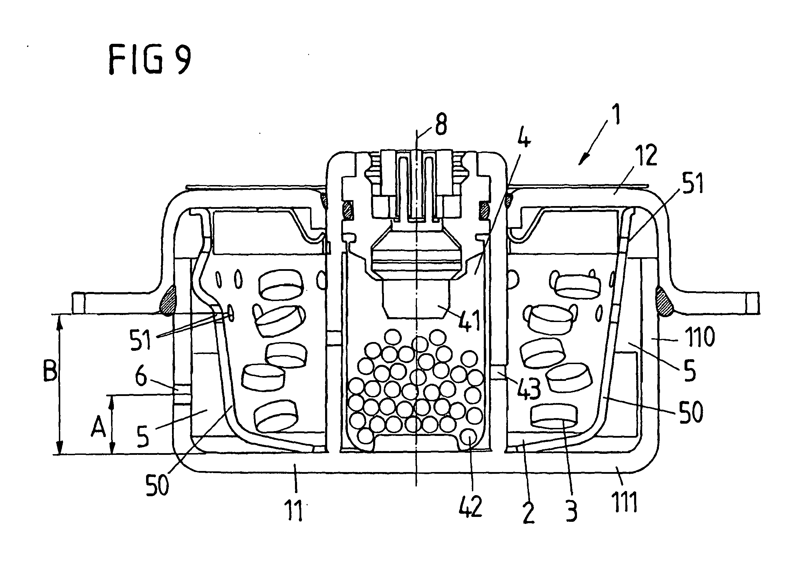

Die Fig. 9 zeigt einen Gasgenerator 2 entsprechend der Fig. 2, wobei zusätzlich der Versatz zwischen den Gasdurchtrittsöffnungen 51 und den Ausblasöffnungen 6 verdeutlicht ist. Sämtliche Gasdurchtrittsöffnungen 51 sind dabei versetzt zu den Ausblasöffnungen 6 angeordnet. Dabei sind die Ausblasöffnungen 6 im unteren Bereich der Abscheidekammer 5 ausgebildet, der eine größere Querschnittsfläche aufweist als obere Bereiche, in denen die Gasdurchtrittsöffnungen 51 ausgebildet sind.

In der Figur 9 gibt A den Abstand einer Ausblasöffnung 6 zum Boden 111 des Generatortopfs 11 an. Dabei wird der Abstand des Zentrums der Ausblasöffnung 6 zur Innenseite des Bodens 111 betrachtet. Weiter gibt B den Abstand einer Gasdurchtrittsöffnung 51 zum Boden 111 des Generatortopfs 111 an. Es wird wiederum der Abstand des Zentrums der Gasdurchtrittsöffnung 51 zur Innenseite des Bodens 111 betrachtet. Es ist nun vorgesehen, dass der Versatz zwischen der Ausblasöffnung 6 und der Gasdurchtrittsöffnung 51 derart bemessen ist, dass B geteilt durch A größer oder gleich 1,5 ist: B/A ≥ 1,5.

Dieses Verhältnis B/A ≥ 1,5 gilt für sämtliche Ausblasöffnungen 6 und Gasdurchtrittsöffnungen 51. Insbesondere ist im Ausführungsbeispiel der Fig. 9 vorgesehen, dass die Ausblasöffnungen 6 bezogen auf die mittige Achse 8 in einer horizontalen Ebene angeordnet sind. Weiter ist vorgesehen, dass die Gasdurchtrittsöffnungen 51 in mehreren Ebenen oder Reihen angeordnet sind. Der Abstand B bezeichnet dabei den Abstand einer Gasdurchtrittsöffnung 51 zum Boden 111, die in einer Ebene von Gasdurchtrittsöffnungen angeordnet ist, die den geringsten Abstand zum Boden 111 aufweist. Das genannte Verhältnis B/A ≥ 1,5 gilt aber natürlich auch für Gasdurchtrittsöffnunen, die in darüberliegenden Ebenen angordnet sind, da mit steigendem Wert für B auch das Verhältnis B/A größer wird.

Es wird darauf hingewiesen, dass die Anordnung der Gasdurchtrittsöffnungen 51 in mehreren Ebenen nur beispielhaft ist. Ebenso können die Gasdurchtrittsöffnungen 51 in nur einer Ebene oder unregelmäßig angeordnet sein. Auch können die Ausblasöffnungen 6 statt in einer Ebene in mehreren Ebenen oder unregelmäßig ausgebildet sein.

Alternativ kann als Bezugspunkt für die Abstände A, B anstatt des Bodens 111 die Kante betrachtet werden, die der Boden 111 mit der Seitenwand 110 bildet. Es gilt dann, dass das Verhältnis des Abstands B einer Gasdurchtrittsöffnung 51 zu dieser Kante zum Abstand A einer Ausblasöffnung 6 zu dieser Kante größer oder gleich 1,5 ist.

Die Erfindung beschränkt sich in ihrer Ausgestaltung nicht auf die vorstehend dargestellten Ausführungsbeispiele. Beispielsweise spielt die genaue Ausgestaltung der Brennkammer keine Rolle für die vorliegende Erfindung. Auch kann vorgesehen sein, dass die Abscheidekammer Bestandteil der Brennkammer ist oder sich außerhalb der Brennkammer befindet, ohne eine gemeinsame Wand mit dieser auszubilden. Weiter ist die konische Verjüngung der Abscheidekammer in den Figuren 1 bis 6 nur beispielhaft zu verstehen. Eine konische Verjüngung kann beispielsweise auch in einer anderen Richtung erfolgen.

## Patentansprüche

1. Gasgenerator für eine Fahrzeuginsassen-Schutzvorrichtung mit
- einer Brennkammer (2), in der eine gaserzeugende Ladung (3) angeordnet ist, und
- einer konisch ausgebildeten Abscheidekammer (5), die aufweist:
o eine erste Wand (50), in der eine Mehrzahl von Gasdurchtrittsöffnungen (51) ausgebildet sind, und
o mindestens eine zu der ersten Wand (50) winklig angeordnete zweite Wand (110), in der mindestens eine Ausblasöffnung (6) ausgebildet ist, wobei
- in der Brennkammer (2) erzeugtes Gas durch die Gasdurchtrittsöffnungen (51) in die Abscheidekammer (5) eintritt und durch die mindestens eine Ausblasöffnung (6) die Abscheidekammer (5) verlässt,
**dadurch gekennzeichnet,**
**dass** die Abscheidekammer (5) durch die erste Wand (50), die zweite Wand (110) und eine dritte Wand (111) gebildet ist, wobei die zweite Wand (110) durch eine Seitenwand des Gasgeneratorgehäuses und die dritte Wand (111) durch einen Boden- oder Deckelbereich des Gasgeneratorgehäuses gebildet ist, und wobei der Gasstrom nach Durchströmen der Gasdurchtrittsöffnungen (51) auf die zweite Wand (110) der Abscheidekammer (5) auftrifft, dort eine Umlenkung erfährt, anschließend auf die dritte Wand (111) der Abscheidekammer (5) auftrifft, dort eine weitere Umlenkung erfährt, und dann durch die mindestens eine Ausblasöffnung (6) die Abscheidekammer (5) verlässt.

2. Gasgenerator nach Anspruch 1, **dadurch gekennzeichnet, dass** die Gasdurchtrittsöffnungen (51) in der Abscheidekammer (5) versetzt zu der mindestens einen Ausblasöffnung (6) angeordnet sind.

3. Gasgenerator nach einem der vorangehenden Ansprüche, **dadurch gekennzeichnet, dass** die Abscheidekammer (5) derart ausgestaltet ist, dass es die Geschwindigkeit des Gasstroms in der Abscheidekammer (5) in Richtung der mindestens einen Ausblasöffnung (6) abnimmt.

4. Gasgenerator nach einem der vorangehenden Ansprüche, **dadurch gekennzeichnet, dass** die Abscheidekammer (5) sich in Richtung der mindestens einen Ausblasöffnung (6) konisch verbreitert.

5. Gasgenerator nach Anspruch 4, soweit rückbezogen auf Anspruch 2, **dadurch gekennzeichnet, dass** sämtliche Gasdurchtrittsöffnungen (51) versetzt zu der mindestens einen Ausblasöffnung (6) angeordnet sind, wobei die mindestens eine Ausblasöffnung (6) in einem Bereich der Abscheidekammer (5) ausgebildet ist, der gegenüber dem Bereich, der die Gasdurchtrittsöffnungen (51) ausbildet, konisch verbreitert ist.

6. Gasgenerator nach einem der vorangehenden Ansprüche, **dadurch gekennzeichnet, dass** jeweils das Verhältnis des Abstandes (B) einer Gasdurchtrittsöffnung (51) zum Boden- oder Deckelbereich (111) zum Abstand (A) der mindestens einen Ausblasöffnung (6) zum Boden- oder Deckelbereich (111) größer oder gleich 1,5 ist.

7. Gasgenerator nach einem der vorangehenden Ansprüche, **dadurch gekennzeichnet, dass** die Gasdurchtrittsöffnungen (51) der ersten Wand (50) durch Löcher, Langlöcher oder Dachgauben gebildet sind.

8. Gasgenerator nach einem der vorangehenden Ansprüche, **dadurch gekennzeichnet, dass** die Gasdurchtrittsöffnungen (51) in der ersten Wand (50) derart ausgebildet sind, dass der Gasstrom aus der ersten Wand (50) im Wesentlichen in tangentialer Richtung in die Abscheidekammer (5) strömt.

9. Gasgenerator nach Anspruch 8, **dadurch gekennzeichnet, dass** die erste Wand (50) derart drehbar gelagert ist, dass aufgrund des tangentialen Gasaustritts die erste Wand (50) in Rotation versetzt wird.

10. Gasgenerator nach einem der vorangehenden Ansprüche, **dadurch gekennzeichnet, dass** die Querschnittsfläche der Gasaustrittsöffnungen (51) größer ist als die Querschnittsfläche der Ausblasöffnungen (6).

11. Gasgenerator nach einem der vorangehenden Ansprüche, **dadurch gekennzeichnet, dass** der Querschnitt der Ausblasöffnungen (6) derart bemessen ist, dass die Gasgeschwindigkeit in den Ausblasöffnungen (6) größer gleich der Schallgeschwindigkeit ist.

12. Gasgenerator nach einem der vorangehenden Ansprüche, **dadurch gekennzeichnet, dass** die erste Wand (50) Bestandteil der Brennkammer (2) ist, eine Begrenzung der Brennkammer (2) darstellt oder außerhalb der Brennkammer (2) angeordnet ist.

13. Verfahren zum Abscheiden von Feststoffen und flüssigen Abbrandresten eines Gasstroms eines Gasgenerators, mit den Schritten:
- Leiten des Gasstroms durch eine konisch geformte Abscheidekammer (5), wobei
- der Gasstrom nach Durchströmen von Gasdurchtrittsöffnungen (51) einer ersten Wand (50) der Abscheidekammer auf eine zweite Wand (110) der Abscheidekammer (5) auftrifft, dort eine Umlenkung erfährt, anschließend auf eine dritte Wand (111) der Abscheidekammer (5) auftrifft, dort eine weitere Umlenkung erfährt, und dann durch mindestens eine Ausblasöffnung (6) die Abscheidekammer (5) verlässt.

14. Verfahren nach Anspruch 13, **dadurch gekennzeichnet, dass** der Gasstrom nach dem ersten Umlenken verursacht durch die Konizität der Abscheidekammer (5) ein Druckgefälle durchläuft, wobei die Geschwindigkeit des Gasstroms reduziert wird.

15. Verfahren nach Anspruch 13 oder 14, **dadurch gekennzeichnet, dass** der Gasstrom in eine Rotation um eine Rotationsachse versetzt wird.

## Claims

1. Gas generator for a vehicle passenger protection device with
- a combustion chamber (2) in which a gas-generating charge (3) is arranged, and
- a conical deposition chamber (5) that has
o a first wall (50), within which a plurality of gas through-holes (51) are formed, and
o at least one second wall (110) which extends at an angle from the first wall (50) and within which at least one blow-off hole (6) is formed, whereby
- Gas generated inside the combustion chamber (2) enters the deposition chamber (5) through the gas through-holes (51) and leaves the deposition chamber (5) through the at least one blow-off hole (6),
**characterized in that**
the deposition chamber (5) is formed by the first wall (50), the second wall (110) and a third wall (111), whereby the second wall (110) is formed by a side wall of the gas generator housing and the third wall (111) is formed by a bottom or cover area of the gas generator housing, and wherein the gas stream after streaming through the gas through-holes (51) strikes the second wall (110) of the deposition chamber (5), there it undergoes a redirection, subsequently strikes the third wall (111) of the deposition chamber (5), there it undergoes a further redirection, and then leaves the deposition chamber (5) through the at least one blow-off hole (6).

2. Gas generator according to claim 1, **characterised in that**, the gas through-holes (51) in the deposition chamber (5) are arranged in an offset manner to the at least one blow-off hole (6).

3. Gas generator according to one of the preceding claims, **characterised in that**, the deposition chamber (5) is designed such that the velocity of the gas stream in the deposition chamber (5) decreases in direction of the at least one blow off-hole (6).

4. Gas generator according to one of the preceding claims, **characterised in that**, the deposition chamber (5) broadens conically in direction of the at least one blow off-hole (6).

5. Gas generator according to claim 4, when dependent on claim 2, **characterised in that**, all gas through-holes (51) are arranged in an offset manner to the at least one blow-off hole (6), whereby the at least one blow-off hole (6) is formed in an area of the deposition chamber (5) which is conically broadened in respect to the area forming the gas through-holes (51).

6. Gas generator according to one of the preceding claims, **characterised in that**, the ratio of the distance (B) of a gas through-hole (51) to the bottom or cover area (111) to the distance (A) of the at least one blow off-hole (6) to the bottom or cover area (111) is in each case larger or equal to 1.5.

7. Gas generator according to one of the preceding claims, **characterised in that**, the gas through-holes (51) of the first wall (50) are formed by holes, elongated holes or dormers.

8. Gas generator according to one of the proceeding claims, **characterised in that**, the gas through-holes (51) in the first wall (50) are formed such that gas stream streams out of the first wall (50) essentially in tangential direction into the deposition chamber (5).

9. Gas generator according to claim 8, **characterised in that**, the first wall (50) is pivotable mounted in such a manner that the first wall (50) starts to rotate due to the tangential gas discharge.

10. Gas generator according to one of the preceding claims, **characterised in that**, the cross-sectional area of the gas through-holes (51) is larger than the cross-sectional area of the blow off-holes (6).

11. Gas generator according to one of the preceding claims, **characterised in that**, the cross section of the blow off-holes (6) is determined such that the gas velocity in the blow off-holes (6) is greater than or equal to the sonic speed.

12. Gas generator according to one of the preceding claims, **characterised in that**, the first wall (50) is part of the combustion chamber (2), defines a boundary of the combustion chamber (2) and is arranged outside of the combustion chamber (2).

13. Process for depositing solids and liquid burned residues of a gas stream of a gas generator, comprising the steps:
- passing the gas stream through the conically formed deposition chamber (5), whereby
- the gas stream after passing gas through-holes (51) of a first wall (50) of the deposition chamber strikes a second wall (110) of the deposition chamber (5), there it undergoes a redirection, subsequently strikes a third wall (111) of the deposition chamber (5), there it undergoes a further redirection, and then leaves the deposition chamber (5) through the at least one blow off-hole (6).

14. Process according to claim 13, **characterised in that**, the gas stream undergoes after the first redirection a pressure drop caused by the conicity of the deposition chamber (5), whereby the velocity of the gas stream is reduced.

15. Process according to one of the claims 13 and 14, **characterised in that**, the gas stream is made to rotate around a rotation axis.

## Revendications

1. Générateur de gaz pour un dispositif de protection des occupants d'un véhicule, comprenant
- une chambre de combustion (2) dans laquelle est agencée une charge (3) génératrice de gaz, et
- une chambre de séparation (5) réalisée sous forme conique, qui comporte :
. une première paroi (50) dans laquelle sont ménagées une pluralité d'ouvertures de traversée de gaz (51), et
. au moins une seconde paroi (110) agencée sous un angle par rapport à la première paroi (50), dans laquelle est ménagée au moins une ouverture de soufflage (6),
dans lequel
- le gaz engendré dans la chambre de combustion (2) pénètre dans la chambre de séparation (5) à travers les ouvertures de traversée de gaz (51) et quitte la chambre de séparation (5) à travers ladite au moins une ouverture de soufflage (6),
**caractérisé en ce que**
la chambre de séparation (5) est formée par la première paroi (50), par la seconde paroi (110) et par une troisième paroi (111), la seconde paroi (110) étant formée par une paroi latérale du boîtier du générateur de gaz et la troisième paroi (111) étant formée par une zone du fond ou du couvercle du boîtier du générateur de gaz, et dans lequel le flux gazeux après avoir traversé les ouvertures de traversée de gaz (51) rencontre la seconde paroi (110) de la chambre de séparation (5) et subit à cet endroit une déviation, et rencontre enfin la troisième paroi (111) de la chambre de séparation (5) et subit à cet endroit une nouvelle déviation, et quitte alors la chambre de séparation (5) à travers ladite au moins une ouverture de soufflage (6).

2. Générateur de gaz selon la revendication 1, **caractérisé en ce que** les ouvertures de traversée de gaz (51) dans la chambre de séparation (5) sont agencées en décalage par rapport à ladite au moins une ouverture de soufflage (6).

3. Générateur de gaz selon l'une des revendications précédentes, **caractérisé en ce que** la chambre de séparation (5) est conçue de telle manière que la vitesse du flux gazeux dans la chambre de séparation (5) décroît en direction de ladite au moins une ouverture de soufflage (6).

4. Générateur de gaz selon l'une des revendications précédentes, **caractérisé en ce que** la chambre de séparation (5) s'élargit sous forme conique en direction de ladite au moins une ouverture de soufflage (6).

5. Générateur de gaz selon la revendication 4, prise en dépendance de la revendication 2, **caractérisé en ce que** la totalité des ouvertures de traversée de gaz (51) sont agencées en décalage par rapport à ladite au moins une ouverture de soufflage (6), et ladite au moins une ouverture de soufflage (6) est ménagée dans une région de la chambre de séparation (5) qui s'élargit sous forme conique par rapport à la région qui forme les ouvertures de traversée de gaz (51).

6. Générateur de gaz selon l'une des revendications précédentes, **caractérisé en ce que** le rapport de la distance (B) d'une ouverture de traversée de gaz (51) par rapport à la zone de fond ou de couvercle (111) sur la distance (A) de ladite au moins une ouverture de soufflage (6) par rapport à la zone de fond ou de couvercle (111) est supérieur ou égal à 1,5.

7. Générateur de gaz selon l'une des revendications précédentes, **caractérisé en ce que** les ouvertures de traversée de gaz (51) de la première paroi (51) sont formées par des trous, des trous oblongs ou des ouvertures coiffées du genre "chien-assis".

8. Générateur de gaz selon l'une des revendications précédentes, **caractérisé en ce que** les ouvertures de traversée de gaz (51) dans la première paroi (50) sont réalisées de telle façon que le flux gazeux sortant de la première paroi (50) s'écoule sensiblement en direction tangentielle vers la chambre de séparation (5).

9. Générateur de gaz selon la revendication 8, **caractérisé en ce que** la première paroi (50) est montée rotative de telle façon que la première paroi (50) est mise en rotation en raison de la sortie tangentielle de gaz.

10. Générateur de gaz selon l'une des revendications précédentes, **caractérisé en ce que** la surface de section transversale des ouvertures de sortie de gaz (51) est supérieure à la surface de section transversale des ouvertures de soufflage (6).

11. Générateur de gaz selon l'une des revendications précédentes, **caractérisé en ce que** la section transversale des ouvertures de soufflage (6) et choisie de telle façon que la vitesse du gaz dans les ouvertures de soufflage (6) est supérieure ou égale à la vitesse du son.

12. Générateur de gaz selon l'une des revendications précédentes, **caractérisé en ce que** la première paroi (50) est une partie constitutive de la chambre de combustion (2), représente une délimitation de la chambre de combustion (2), ou bien est agencée à l'extérieur de la chambre de combustion (2).

13. Procédé pour séparer des matières solides et des restes de combustion liquides d'un flux gazeux d'un générateur de gaz, comprenant les étapes suivantes :
- on mène le flux gazeux à travers une chambre de séparation de forme conique (5), de sorte que
- le flux gazeux après avoir traversé des ouvertures de traversée de gaz (51) d'une première paroi (50) de la chambre de séparation rencontre une seconde paroi (110) de la chambre de séparation (5) et subit à cet endroit une déviation, et rencontre ensuite une troisième paroi (111) de la chambre de séparation (5) et subit à cet endroit une nouvelle déviation, et quitte alors la chambre de séparation (5) à travers au moins une ouverture de soufflage (6).

14. Procédé selon la revendication 13, **caractérisé en ce que** le flux gazeux après la première déviation subit une chute de pression provoquée par la conicité de la chambre de séparation (5), de sorte que la vitesse du flux gazeux est réduite.

15. Procédé selon la revendication 13 ou 14, **caractérisé en ce que** le flux gazeux est mis en rotation autour d'un axe de rotation.
